# EUROPEAN PATENT APPLICATION

(11) **EP 4 738 486 A1**
(43) Date of publication of application: **06.05.2026**
(21) Application number: 24222963.1
(22) Date of filing: 23.12.2024
(51) Int. Cl.: H01M 8/04014, H01M 8/04007, H01M 8/0606, H01M 8/0662, H01M 8/18, H01M 8/0612, H01M 8/12

(54) **A HEAT MANAGEMENT UNIT FOR A REVERSIBLE ELECTROCHEMICAL DEVICE, AN ELECTROCHEMICAL SYSTEM WITH A HEAT MANAGEMENT UNIT AND A STACK MODULE, AND A METHOD FOR HEAT MANAGEMENT OF THE ELECTROCHEMICAL SYSTEM**

(30) Priority: 31.10.2024 EP 24210305
(71) Applicant: SolydEra SA, 1400 Yverdon-les-Bains (CH)
(72) Inventor: Wuillemin, Zacharie, 1096 Cully (CH); Perret, Julien, 1400 Yverdon-les-Bains (CH); Waeber, Florian, 1266 Duillier (CH); Cornu, Thierry, 1004 Lausanne (CH); Diethelm, Stefan, 1680 Romont (CH)
(74) Representative: Hepp Wenger Ryffel AG

(57) **Abstract**

A heat management unit (1) for a reversible electrochemical system comprising a process air (2) flow path and a fuel (3) flow path are presented. The process air (2) flow path comprises a unit process air inlet (4), a first heat exchanger (7), an electric heater (8), a second heat exchanger (9), and a unit process air outlet (11). The fuel flow path comprises a unit fuel inlet (5), a unit fuel outlet (12), and a fuel path through the second heat exchanger (9). In the second heat exchanger (9) heat is exchangeable between process air (2) and fuel (3). The heat management unit (1) further comprises a stack connection device (10). The stack connection device (10) enables a connection to a stack module (30). The stack connection device (10) comprises the unit fuel outlet (12), the unit process air outlet (11) and additionally a stack exhaust inlet (13) and a stack fuel inlet (14). That the stack exhaust inlet (13) is connected to an afterburner (6). In the afterburner (6), stack exhaust from the stack exhaust inlet (13) is usable for the combustion of fuel (3) in the afterburner (6). The afterburner (6) is connected to the first heat exchanger (7) such that heat is exchangeable between an afterburner gas (20) from an afterburner gas outlet (53) and process air (2) from the unit process air inlet (4) in the first heat exchanger (7).

## Description

The invention relates to a heat management unit for a reversible electrochemical device, an electrochemical system with a heat management unit and a stack module, and a method for heat management of the electrochemical system according to the preamble of the independent claims.

The operating temperature of electrolysis systems with solid oxide cell stacks for power production and/or fuel production is typically in the range of 650 to 900 _{°}C. Such operating temperatures call for measures to minimize heat losses to the environment. In addition, thermal gradients across the cell stacks are to be kept within certain limits to limit the thermomechanical stress imposed to stack components that are prone to mechanical failure, such as the ceramic cells and sealants that exist in the stacks, or that might be prone to contact loss due to uneven compression within the stacks related to imbalances in thermal expansion rates. For this reason, the feed gases are preheated to temperatures close to the operating temperature of the stacks. Finally, a temperature gradient typically exists across the stacks due to the generation of Joule heat associated with resistive losses when the stacks are in operation, and gas conversion reactions inside the stacks. Apart from lowering the electric current or modifying the enthalpy of reaction by reactant pre-processing, such temperature gradients may be controlled by tuning the mass flow of the reactants to dissipate the heat that is generated in the stacks, where, for economic reasons, it is usually the least valuable reactant that is used for stack temperature gradient control. This may be air, which in fuel cell mode provides oxygen ions to oxidize the fuel, and in electrolysis mode is used as a sweep gas for the generated oxygen gas.

Previous solutions for efficient heat management and adequate gas processing within electrochemical systems involve preheating process gasses with heat exchangers or electric heaters, heat exchangers for heat recuperation, capturing radiative heat from hot components, exhaust gas recycling, reuse of condensate, the integration of burners that utilize at least one of the exhaust gases, and thermal integration of exhaust gas post-processing units, such as a water-gas shift unit. In addition, the use of start-up burners with specific gas recycling methods has been reported.

For a long time, system optimization focused on employing solid oxide stacks for power production. The recent shift of using solid oxide stacks for fuel production, stimulated by the incentive to greenify today's society, have led to different views on system optimization, where the utilization of waste streams, system scaling, and safety aspects in the handling of hydrogen get more attention, whilst the availability of green electric power makes electric heating a more viable option. CN115807232A discloses a solid oxide electrolyzer system that is connected to a microgrid connected to photovoltaics, wind turbines, and batteries that, in addition to the usual solutions already addressed in the above prior art, utilizes waste heat and industrial steam for hydrogen production. CN113278993B addresses the risk of hydrogen ignition when being exposed to a heat source and suggests using a solid oxide electrolyzer arrangement where only steam is preheated, the hydrogen only being mixed in after steam preheating, just before feeding the mix to the electrolyzer.

Whilst CN113278993B provides a solution to the safe operation of dedicated electrolyzers, it is less suitable for solid oxide stacks that are operated both as electrolyzer and as fuel cell. This is related to the composition of the feed gas provided to the fuel electrode. During electrolysis operation, only a small amount of reducing gas such as hydrogen, for example 10 vol% hydrogen, is mixed in with the steam to keep the fuel electrode reduced. Conversely, fuel used for power production may contain a substantially higher amount of hydrogen or other reducing gas, which complicates the gas preheating in case only the non-flammable gas constituents are preheated.

Thus, it is an object of the present invention to overcome the drawbacks of the prior art. It is in particular an object to provide a solution for realizing system arrangements where equipment can be used in both operating modes, wherein the feed, including any reducing gas, can be heated both in fuel cell mode and in electrolysis mode in an efficient way.

The object is solved by the subject-matter of the independent claims. Preferred embodiments are described with regard to the dependent claims.

The object is in particular solved by a heat management unit for a reversible electrochemical system. The heat management unit comprises a process air flow path and a fuel flow path. The process air flow path comprises a unit process air inlet, a first heat exchanger, an electric heater, a second heat exchanger, and a unit process air outlet. The fuel flow path comprises a unit fuel inlet, a unit fuel outlet, and a fuel path through the second heat exchanger. In the second heat exchanger heat is exchangeable between process air and fuel. The heat management unit further comprises a stack connection device. The stack connection device enables a connection between the heat management device and a stack module. The stack connection device comprises the unit fuel outlet, the unit process air outlet and additionally a stack exhaust inlet and a stack fuel inlet. The stack exhaust inlet is connected to an afterburner. In the afterburner, the stack exhaust from the stack exhaust inlet is usable for the combustion of fuel from the unit fuel inlet. The afterburner comprises an afterburner gas outlet for afterburner gas which comprises fuel, in particular combusted fuel, wherein the afterburner is connected to the first heat exchanger such that heat is exchangeable between the afterburner outlet gas and process air from the unit process air inlet in the first heat exchanger.

This arrangement allows for at least partially preheating process air to a temperature close to the stack inlet temperature.

The second heat exchanger can be located adjacent to the electric heater. The second heat exchanger can comprise at least one hollow tube through which fuel from the unit fuel inlet is flowable. The second heat exchanger in particular exchanges heat between the fuel from the unit fuel inlet and process air from the unit process air inlet, preferably preheated process air.

This further enhances efficiency of the system.

The fuel flow path can comprise a third heat exchanger, wherein the third heat exchanger is connected to the unit fuel inlet and stack fuel inlet such that heat is exchangeable between fuel from the unit fuel inlet and stack fuel from the stack fuel inlet in the third heat exchanger.

The use of a third heat exchanger further enhances efficiency of the system.

The fuel flow path can comprise a fuel path through a reformer equipped to reform fuel. The fuel can comprise of carbonaceous gas and/or hydrogen and/or ammonia. The reformer can be connected to the afterburner gas outlet and the unit fuel inlet. The reformer can comprise a reformer fuel outlet for fuel, wherein the reformer fuel outlet can be connected to the second heat exchanger, optionally via the third heat exchanger such that heat is first exchangeable in the third heat exchanger between fuel from the reformer fuel outlet and stack fuel from the stack fuel inlet, such that heat is exchangeable between fuel and process air in the second heat exchanger.

This enables levelling of the temperatures of the process air and the fuel prior to supplying the gases to the at least one stack.

The heat management unit can comprise a flow regulator to regulate the flow rate of afterburner gas to the reformer such as to regulate the temperature of the reformer.

This enables a precise regulation of the reformer temperature. In particular, the temperature can be controlled by exchanging heat between the afterburner gas from the afterburner gas outlet and the fuel, from the unit fuel inlet, flowing through the reformer itself.

The reformer can comprise a heat exchanger configured to exchange heat between the afterburner gas outlet and fuel from the unit fuel inlet.

This further enhances efficiency.

The fuel flow path can comprise a third heat exchanger which is connected to the reformate fuel outlet of the reformer and the stack fuel inlet such that heat is exchangeable between fuel from the reformer fuel outlet and stack fuel in the third heat exchanger.

This further enhances efficiency.

The heat management unit can be integrated in a thermally insulated enclosure.

This keeps the temperature within the heat management unit substantially close to the operating temperature of an electrochemical device, in particular a stack module comprising at least one reversible solid oxide cell, to enhance efficiency and simultaneously obviate high temperature differences.

The afterburner gas outlet can be connected to a gas processing unit, the gas processing unit comprising means for cooling afterburner gas and/or an outlet for exhausting afterburner gas from the heat management unit and/or means for purifying fuel from the heat management unit in case the stack module is operated as an electrolyzer and /or means for preparing the fuel supplied to the unit fuel inlet of the heat management unit and/or means for purifying fuel from the heat management unit in case the stack is operated as a fuel cell and/or means to mix external fuel and purified fuel cell fuel and feeding this to the stack module as fuel cell fuel, and/or means for feeding external fuel or a mix of external fuel and purified fuel cell fuel to the afterburner.

In particular, heat can be recuperated from an exhaust gas, preferably afterburner gas, wherein the afterburner gas comprises burner gas or stack exhaust from the heat management unit, wherein the function of heat recuperation from an exhaust gas may be integrated within the gas processing unit, preferably a cooling means within the gas processing unit, wherein the cooling means can be upgraded for recuperating heat. In case the system is operated as a fuel cell, the fuel-containing exhaust gas, in particular stack fuel from the stack fuel inlet, can be used to obtain an upgraded fuel that can be supplied to the afterburner and/or the stack module. In case the system is used as electrolyzer, said fuel-containing exhaust gas can, besides being cooled within a cooling means with an option for heat recuperation, be upgraded to obtain hydrogen-rich fuel, for example by means of pressure swing adsorption. This hydrogen-rich fuel can also be supplied to the afterburner but would more preferably be used to be used for other purposes (e.g. be supplied to another process that requires hydrogen, or supplied to a gas infrastructure to be used at a different location).

This further enhances the efficiency of the system.

The object is further solved by a reversible electrochemical system comprising the heat management unit as previously described, and a stack module.

The electrochemical system has an optimized heat management when being connected to the heat management unit.

The stack module can comprise at least one solid oxide cell. The stack module can be connected to the heat management unit by the stack connection device.

In particular, a reversible solid oxide cell is energetically enhanced, wherein a reversible solid oxide cell enhances the functionality and efficiency of the electrochemical system and renders the electrochemical system highly versatile, in particular when connected to the heat management unit. Such an electrochemical system can be easily and efficiently integrated with energy storage, other energy conversion systems such as solar power parks or wind parks, and/or complementary infrastructure already available on-site.

The electrochemical system can comprise a control unit with a control logic, and in particular controllers and/or sensors for controlling the electrochemical system

This enables an automatic control of the reversible solid oxide cell and the heat management unit.

The object is further achieved by a method for heat management of an electrochemical system as previously described. Process air is conducted through the process air flow path and fuel, in particular any gas that comprises fuel, is conducted through the fuel flow path. The process air is heated up in the first heat exchanger and/or in the electric heater and then exchanges heat in the second heat exchanger. It is then fed to the stack module via the unit process air outlet. Fuel is conducted through the second heat exchanger. The fuel exchanges heat with the process air and enters the stack module via the unit fuel outlet. The stack exhaust from the stack exhaust inlet is conducted to the afterburner and afterburner gas is conducted from the afterburner to the first heat exchanger.

This method enables an efficient way of using excess heat in an electrochemical system.

The fuel from the unit fuel inlet can first be heated in the third heat exchanger and then conducted through the second heat exchanger.

This enhances efficiency of the method.

The fuel can first be conducted through the reformer and then conducted through the second heat exchanger.

This enhances efficiency of the method.

The afterburner can ignite the electrochemical system during start-up operation by combusting fuel from the unit fuel inlet with stack exhaust from the stack exhaust inlet.

This enables a smooth and efficient start-up.

The stack exhaust can be directed from the afterburner to the gas processing unit outside the thermally insulated enclosure for cooling and exhausting the stack exhaust gas from heat management unit or purifying the stack exhaust into a fuel which is fed to the unit fuel inlet.

This further enhances efficiency.

Preferably, all components of the heat management unit, with the exception of the gas processing unit, are preferably integrated in a thermally insulated enclosure. Processes inside the enclosure that involve temperatures that are substantially close to the operating temperature of the stack module, such as within the afterburner and the second heat exchanger, preferably take place at the side where the stack module is located, whilst processes inside the enclosure that involve temperatures that are substantially lower than the operating temperature of the stack module, such as unused gases, in particular fresh gases, supplied to the enclosure and cooled off-gases, are located furthest away from the stack module. The stack module is preferably disposed adjacent to the heat management unit, and more preferably directly juxtaposed to the hot side of the heat management unit. As such, the heat-insulation duty at that side of the enclosure can be reduced, as that side of the heat management unit will have a temperature which is close to that of the stack module. Similarly, the heat insulating duty at the cold side of the heat management unit, i.e. the side where process air and fuel from the unit fuel inlet are supplied, can be lower. Consequently, as less heat insulation is required, the thermally insulating enclosure around the heat management unit and thus the heat management unit can be more compact.

The electrochemical system may comprise a support structure on which the heat management unit and the stack module are disposed. The support structure may comprise supporting elements and a chassis, wherein the heat management unit and the stack module are separated from the support structure by a thermally insulating layer such as to create a hot zone which separates the heat management unit and the stack module from any equipment disposed beneath the chassis.

The fuel may substantially contain reducing gas, in particular wherein at least one of carbonaceous gas, hydrogen, and ammonia comprise the fuel for feeding into an electrochemical system during operation in fuel cell mode, and may substantially contain oxidizing gas, for example steam, for operation of the system in electrolysis mode.

The process air may substantially contain oxygen, such as to provide oxygen ions to oxidize the fuel during operation in fuel cell mode and functions as a sweep gas for the generated oxygen gas during operation of the electrochemical system in electrolysis mode. In electrolysis mode, fuel may comprise carbon dioxide in addition to steam, which are convertible into hydrogen, and carbon monoxide, respectively, whilst generated oxygen is released to the process air. Hydrogen and/or carbon monoxide produced during electrolysis mode may be directable as storage fuel to a storage or used for other purposes. Storage fuel is then usable as fuel when the electrochemical system is operated in fuel cell mode.

The afterburner may comprise any burner suitable for combusting off-gas, waste gas, fresh fuel, or a mixture of these, together with stack exhaust from the stack exhaust inlet, but is preferably comprised of at least one tube made of inert material that can withstand temperatures above 1000 _{°}C with apertures at more or less regular intervals through which the fuel gas or fuel gas mixture is released. Around the at least one burner tube, the stack exhaust from the stack exhaust inlet, wherein the stack exhaust may comprise air, which may be used to burn fuel from an origin as previously described, such as to create a hot afterburner gas which is then usable in the first heat exchanger for heating process air from the unit process air inlet. In particular, the afterburner is configured to combust unoxidized residual fuel from the stack module during operation of the electrochemical system in fuel cell mode, wherein said residual fuel may comprise unreacted hydrogen and/or carbonaceous fuel. The combustion products include water and/or hydrogen. In electrolysis mode, the afterburner may be configured to burn hydrogen and/or carbon monoxide. In case the afterburner is not in operation, the process air may pass the first heat exchanger without exchanging heat with afterburner gas and is solely heated by the electric heater. In fuel cell mode, a water-gas shift unit within the gas processing unit may be used to shift stack fuel comprising carbon monoxide into additional hydrogen and carbon dioxide. In electrolysis mode, a water-gas shift unit may be active in order to assist in reforming steam and/or carbon monoxide into fuel. The water-gas shift unit may also be used to enhance hydrogen production and purification during fuel cell mode and/or to adjust the composition of recycled fuel produced by the gas processing unit during operation in fuel cell or electrolysis mode.

In addition, the afterburner may be equipped with a fuel igniter, for example an electric heating element, which may be used for system start-up. The afterburner exhaust flow path may further be equipped with a labyrinth structure, comprising at least one plate that elongates the flow path prior to supplying it to a heat exchanger. It thus improves the combustion and temperature homogeneity of the afterburner gas and thus improves the effectivity of the heat exchanger to which the afterburner gas is supplied.

The first heat exchanger is preferably a plate heat exchanger and is dimensioned such that it can preheat the process air to a temperature of at least 550 _{°}C at flow rates sufficient to keep the temperature gradient within the stack module, characterized as the difference between the stack exhaust relative to the temperature of the process air supplied to the unit process air outlet, lower than 100 _{°}C, preferably lower than 50 _{°}C. The heat exchanger may have a low pressure drop, for example below 10 mbar.

The second heat exchanger in which heat is exchangeable between process air from the first heat exchanger and/or the electric heater and fuel, originating from the unit fuel inlet and preheated in the afterburner and optionally in the third heat exchanger, such that the function of the second heat exchanger is to level the temperature of the preheated air with the temperature of the preheated fuel gas. The second heat exchanger may comprise of at least one, preferably a plurality of tubes through which fuel from the unit fuel inlet, preferably from the third heat exchanger, is flowing whilst being surrounded by the preheated process air, the tube or tubes being arranged such that intimate contact between the process air and the tubes is realized. At either side of the tube or tubes through which the fuel is flowing, a fuel gas manifold may be disposed to distribute or collect the fuel. The tube or tubes are preferably made of inert material, such as a ceramic, for example alumina, or made of metal or metal alloy that may be coated to improve its inertness upon exposure to the said hot gases. The tubes may be oval, substantially cylindrical, or cylindrical in structure, or may have any other shape that is suitable for an effective exchange of heat. Preferably, the tubes are mechanically robust, such that reliable manifolding can be realized, and the risk of leakage of fuel gas is small.

Preferably, the second heat exchanger is placed adjacent to the electric heater. This way, the tube or tubes will not only be exposed to convective heat but also be exposed to radiative heat. For this purpose, the second heat exchanger comprises of a tube or tubes, wherein the tube is preferably made of material that is most sensitive to radiative heat, such as metal alloy, or is/are coated with material that is receptive to radiative heat, such as glass, or enamel. In addition, the air-fuel heat exchanging tube arrangement of the second heat exchanger may include at least a radiative shield disposed near the tubes and directs radiative heat from the electric heater towards them.

Preferably, before exchanging heat with the preheated process air that has a temperature at least that of the fuel provided to the second heat exchanger, the fuel gas has a temperature above the fuel's ignition temperature. This way, in case leakage occurs that leads to intermixing of the fuel gas and the process air, the fuel will oxidize rapidly, where the risk of explosions or the release of poisonous gases such as carbon monoxide, are small.

The electric heater that heats the process air is preferably a resistive heater that heats the process air by convection. The resistive heater may be a porous, electrically resistive medium through which the process air is blown or may be a plurality of aligned heating elements through between which process air is blown by arranging the elements such that the heating of process air takes place in a homogeneous way. A dielectric porous medium, such as ceramic foam, may be provided between the heating elements to improve the homogeneity of the process air temperature after passing the heat transfer section. Heating elements that generate heat when supplied with DC or AC current include Ni/Cr, Ni/Cu, and Fe/Cr/Al, which are available commercially. In case Cr-containing heating elements are used, the heating elements may be coated with material that contains less Cr, preferably no Cr, to lower the release of gaseous chromium species, which otherwise may poison the electrodes in the at least one reversible solid oxide cell within the stack module that are exposed to the process air. Alternatively, the dielectric porous medium that may surround the electric heating elements may be coated with Cr-getter material, or a Cr getter may be disposed upstream the stack module to remove the gaseous Cr species from the preheated process air. An example of a Cr-getting material is strontium-containing material such as strontium-doped lanthanum manganite.

The heat management unit may comprise a third heat exchanger and/or a reformer. In case only hydrogen is used as fuel when the electrochemical system, in particular the stack module, is operated in fuel cell mode, the heat management unit may not include a reformer, but only include the third heat exchanger. In case also other fuels are used (carbonaceous fuel, ammonia), fuel preprocessing in the reformer is indispensable.

The reformer may include a steam reforming catalyst to convert hydrocarbons such as methane. In case the fuel also contains ammonia, the reforming catalyst will also promote ammonia cracking. In case the fuel gas contains ammonia, or a mix of ammonia and hydrogen, the reformer may contain ammonia cracking catalyst. In both cases, i.e. steam reforming and ammonia cracking, heat may be consumed in the reformer that may be provided by the afterburner gas. The reformer may produce a reformed fuel which may pass from the reformer fuel outlet through the third heat exchanger where heat is exchanged between the reformer fuel and stack fuel, the fuel from the reformer, in particular from the reformer fuel outlet, then passing the second heat exchanger where the temperature of the fuel from the reformer is levelled with the temperature of the process air, preferably process air which has been preheated by at least the electric heater or the afterburner gas. The fuel from the reformer fuel outlet, in particular reformed fuel from the reformer fuel outlet, may then be supplied to the stack module via the stack connection device. The reformer, which exchanges heat with the afterburner gas from the afterburner gas outlet, may be a reformer-heat exchanger.

The temperature of the afterburner gas may be controlled by controlling the amount of fuel mixed with stack exhaust. The temperature of the reformer may be controlled by controlling the flow rate of afterburner gas from the afterburner to the reformer with a flow regulator, which may comprise an adjustable valve, such as to regulate the temperature of the reformer. After passing through the reformer, the remaining heat in the afterburner gas may be recuperated for other purposes, after which the afterburner gas is exhausted, preferably wherein the afterburner gas is first sent to a gas processing unit which may comprise a waste fluid outlet for exhausting said gas as a waste fluid.

The heat management unit may comprise a third heat exchanger in which heat is exchangeable between stack fuel from the stack fuel inlet and fuel originating from the unit fuel inlet, wherein the fuel originally originating from the unit fuel inlet may be afterburner gas from the afterburner gas outlet or fuel from the reformer fuel outlet. The third heat exchanger may also comprise an reformer catalyst according to the above disclosure and/or scavenging material to remove impurities from the gas stream, for example porous nickel or nickel cermet to remove Si impurities which are common when feeding the steam-containing gas when the system is operated as electrolyzer. In that case, the temperature of the third heat exchanger with a reformer function may be controllable by controlling the amount of heat transferred to the fuel from the unit fuel inlet from stack fuel from the stack fuel inlet. In case there is no third heat exchanger, fuel can be fed from the reformer to the second heat exchanger directly.

The third heat exchanger may be similar in design to the first heat exchanger. As both flow compartments of the third heat exchanger will contain fuel-comprising gas, the occurrence of small leaks between both compartments will be less critical than in case one compartment contains air, in particular process air. Consequently, the requirements to prevent gas intermixing are less stringent, and cheaper solutions in the realization of the third heat exchanger are possible. Preferably, as previously said, upon exiting the third heat exchanger, the heated fuel has a temperature higher than the ignition temperature.

Stack fuel from the stack fuel inlet may thus first exchange heat with fuel that has left the reformer and then be sent to a gas processing unit that further treats the stack fuel. The fuel leaving the reformer may be directed to the third heat exchanger, where the fuel from the reformer may exchange heat with the stack fuel.

The gas processing unit may comprise a water-gas shift unit and/or a cooler, through which the stack fuel, comprising at least partially oxidized fuel gas, flows from the stack fuel inlet, optionally after passing through the third heat exchanger. The water-gas shift reactor may be adiabatic or temperature-controlled. In the case of using a cooler instead of a water-gas shift reactor for receiving the stack fuel, the cooler comprising a cooling fluid may be used to control the temperature of the stack fuel by controlling the flow rate of the cooling fluid. Next, the stack fuel may be sent to a condenser, preferably located in the gas processing unit. The cooler and/or the condenser may be operated with air, cooling water, or process water, or with any fluid that is able to dissipate heat from the stack fuel, wherein the process water may be used for steam generation for feeding as fuel into the unit fuel inlet to the heat management unit and wherein condensate from the condenser may be used for steam generation, wherein the steam may comprise fuel for feeding into the unit fuel inlet of the heat management unit. The stack fuel may also pass a purifier within the gas processing unit to purify the stack fuel into hydrogen, which may be recirculated as fuel to the heat management unit via the unit fuel inlet. Preferably, the gas processing unit comprises separate coolers for cooling afterburner gas and stack fuel.

The stack exhaust, which has passed through the afterburner and/or the first heat exchanger and/or the reformer may be treated in the gas processing unit in the same way as stack fuel is treated in the gas processing unit as described above.

Preferably, the composition of fuel from the unit fuel inlet which is sent to the afterburner can be chosen independently from the composition of fuel from the unit fuel inlet, which is sent to the second heat exchanger, wherein the fuel sent to the second heat exchanger may have at least first passed through the third heat exchanger or first passed through the reformer and then the third heat exchanger. In particular, the unit fuel inlet may comprise a mixer for mixing external fuel, in particular fresh fuel, with fuel from the gas processing unit fuel outlet, wherein the fuel from the gas processing unit comprises purified and/or recycled fuel. The heat management unit may comprise a first and a second unit fuel inlet, wherein each unit fuel inlet comprises a mixer for mixing external fuel and purified and/or recycled fuel from the gas processing unit. In this case, the afterburner may be configured to receive a mixture of said fuels from the first unit fuel inlet and the second heat exchanger is configured to receive a mixture of said fuels from the second unit fuel inlet. In each case, the mixer/mixers can be controlled such as to regulate the precise composition of the mixture of external fuel and purified and/or recycled fuel sent to the afterburner and the second heat exchanger, and ultimately the stack module, respectively. The composition of the fuel mixture, in particular the fuel mixture receivable by the stack module is chosen such as to achieve a composition of fuel which enhances efficiency and helps prevent degradation of materials within the electrochemical system.

In general, the terms purified fuel cell fuel, purified fuel and recycled fuel can be used interchangeably. As such, these terms may be used to refer to an upgraded fuel, hydrogen-rich fuel, stack fuel comprising and steam obtained from the condensate of the condenser, wherein the hydrogen-rich fuel may have been obtained by means of pressure swing absorption, as described above. The purified fuel (i.e. recycled fuel) can be supplied to the heat management unit, in particular the afterburner and/or the unit fuel inlet and/or other processes from the gas processing unit fuel outlet via a recycled fuel line. The recycled fuel line may also be configured to direct the stack fuel which is comprising at least partially oxidized fuel gas from the stack fuel inlet to the afterburner.

Preferably, the processing of stack fuel into a recycled fuel (e.g. upgraded fuel) during fuel cell mode and the processing of stack fuel into a recycled fuel comprising substantially of hydrogen-rich fuel take place within the gas processing unit. In electrolysis mode, recycled fuel may substantially comprise hydrogen-rich fuel, which may be diverted from the recycled fuel line as a storage fuel by the use of an adjustable valve, wherein the recycled fuel line may be multi-functional, in particular have a dual functionality. A multi-functional recycled fuel line may thus function to direct the storage fuel as a product to a storage for later use, preferably for being used as a fuel directable to the unit fuel inlet during operation in fuel cell mode, and/or to direct the storage fuel to an external process and/or to feed a recycled fuel back to the heat management unit, in particular the unit fuel inlet. Thus, the recycled fuel line is designed such that it is compatible for operation in both fuel cell mode and electrolysis mode. Further, in electrolysis mode, stack fuel from the stack fuel inlet may already substantially comprise a hydrogen-rich fuel which may be directable directly to a storage as described above and/or for use in an external process, without processing within the gas processing unit. The electrochemical system, in particular the gas processing unit, may also comprise an outlet for storage fuel which is separate from the recycled fuel line.

The electrochemical system may comprise additional equipment, including power electronics to supply power to the stack compartment or to dissipate power from the stack module, a system control logic and controllers and/or for controlling the flow paths of gases through the system and gas processing. In particular, the system control logic and controllers/sensors can be used to control the mixers and/or temperature and/or flow rate and/or volume and/or pressure of the gases within the electrochemical system. The system control logic can operate automatically based on measurements from mixers and/or temperature sensors and/or flow rate sensors and/or pressure and/or volume sensors, wherein the system control logic operates based on an automated mechanism and/or algorithms. The sensors may be connected to a feedback control loop of the system control logic, wherein the feedback control loop can control the electrochemical system by changing an input parameter from a sensor, and by measuring its effect on an output parameter of a sensor. A lower limit and an upper limit may be defined for each output parameter from a sensor. The system control logic can also be used to regulate the flow regulators within the heat management system. The system control logic can also comprise a manual control function. For example, especially when the electrochemical system is operated in fuel cell mode using hydrogen as the fuel, the oxidation of which is exothermic, the process air flow consequently needs to be high.

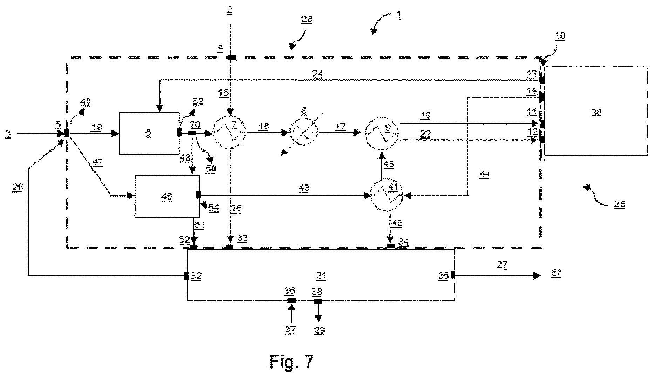

The arrangement of the electrochemical system is highly adaptable to the desired plant infrastructure and may be realized on module level (i.e. the arrangement of the heat management unit, stack module and peripherals as depicted in Fig.7), array level (i.e. a series of at least two juxtaposed modules), or on the level of the electrochemical system.

A third aspect of the invention relates to a method for heat management for an electrochemical system as previously described, the method for heat management comprising the steps of:
a) Conducting process air through the process air flow path and conducting fuel through the fuel flow path wherein
b) Process air is heated up in the first heat exchanger and/or in the electric heater,
c) The process air exchanges heat in the second heat exchanger and is fed to the stack module via the unit process air outlet,
d) Fuel from the unit fuel inlet is conducted through the second heat exchanger, where the fuel exchanges heat with the process air,
e) Fuel is conducted through the unit fuel outlet to the stack module,
f) The afterburner receives stack exhaust from the stack exhaust inlet,
g) The stack exhaust is conducted from the afterburner to the first heat exchanger.

Additionally, step d) may comprise the step of wherein fuel is first conducted through the third heat exchanger where it exchanges heat with stack fuel from the stack fuel inlet. Additionally, or alternatively, in step d), the fuel is first conducted through the reformer and then through the third heat exchanger.

The invention is explained in more detail with the aid of the figures. These are preferred embodiments which are not to be understood as limiting. The figures show:
- Figure 1:: Schematic arrangement of the heat management unit within an electrochemical system according to a first embodiment.
- Figure 2:: Schematic diagram of an alternative arrangement of the heat management unit according to the first embodiment.
- Figure 3:: Schematic diagram of an additional alternative arrangement of the heat management unit according to the first embodiment.
- Figure 4:: Schematic arrangement of the heat management unit within an electrochemical system according to a second embodiment.
- Figure 5:: Schematic diagram of an alternative arrangement of the heat management unit according to the second embodiment.
- Figure 6:: Schematic diagram of an additional alternative arrangement of the heat management unit according to the first embodiment.
- Figure 7:: Schematic arrangement of the heat management unit within an electrochemical system according to a third embodiment.
- Figure 8:: Schematic diagram of an alternative arrangement of the heat management unit according to the third embodiment.
- Figure 9:: Schematic diagram of an additional alternative arrangement of the heat management unit according to the first embodiment.
- Figure 10:: 3D representation of the components of the heat management unit from outside the thermally insulated enclosure according to the first and second embodiment.
- Figure 11:: Generalized 3D-representation of the components of the heat management unit within the inside of the thermally insulated enclosure according to the first and the second embodiment.
- Figure 12:: Schematic presentation of the air flow path through the heat management unit.
- Figure 13:: Schematic presentation of the fuel flow path through the heat management unit.
- Figure 14:: Presentation of the arrangement of the heat management unit relative to the stack module.

The same reference signs in the figures identify the same elements.

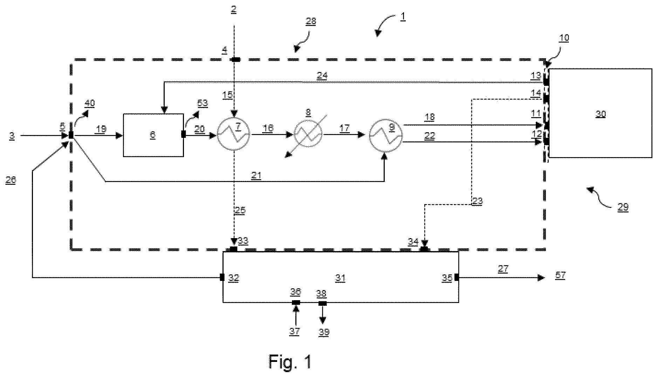

Figure 1 shows the arrangement of the heat management unit 1 and an electrochemical system 29 according to a first embodiment. Except for a stack connection device 10, a stack module 30, and a gas processing unit 31, all equipment depicted in Figure 1 is integrated in a thermally insulated enclosure 28. The equipment within the thermally insulated enclosure 28 forms the heat management unit 1. The heat management unit 1, a stack connection device 10, the stack module 30, and the gas processing unit 31 comprise the electrochemical system 29.

The heat management unit 1 comprises a unit process air inlet 4 for process air 2 and unit fuel inlet 5 for fuel 3. The stack connection device 10 enables a connection to the stack module 30, which comprises at least one reversible solid oxide cell, wherein the stack connection device 10 comprises the unit process air outlet 11, unit fuel outlet 12, a stack exhaust inlet 13 and a stack fuel inlet 14. From the stack fuel inlet 14, stack fuel is flowable to the gas processing unit 31 via stack fuel line 23, wherein the gas processing unit 31 comprises a stack fuel inlet 34 for receiving said stack fuel.

The heat management unit 1 comprises an afterburner 6, which is configured to receive stack exhaust from the stack exhaust inlet 13 via stack exhaust line 24 and fuel 3 from the unit fuel inlet 5 via fuel line 19. The afterburner 6 comprises an afterburner gas outlet 53 for afterburner gas 20. The afterburner gas outlet 53 functions to feed afterburner gas 20 through a first heat exchanger 7, which is configured to receive process air 2 from the unit process air inlet 4 via process air line 15. The first heat exchanger 7 is configured to heat the process air 2 by exchanging heat between the afterburner gas 20 and process air 2, wherein the first heat exchanger 7 comprises a plate heat exchanger.

The afterburner gas 20 is directable from the first heat exchanger 7 to the gas processing unit 31 via afterburner gas line 25, wherein the gas processing unit 31 comprises an afterburner gas inlet 33 for receiving afterburner gas 20 from the afterburner gas line 25.

The process air 2 is directable from the first heat exchanger 7 to the electric heater 8 via process air line 16 and from the electric heater 8 to a second heat exchanger 9 via process air line 17. From the second heat exchanger 9, process air 2 is directable to the unit process air outlet 11 via process air line 18.

The second heat exchanger 9, which comprises of at least one tube through which fuel 3 is flowable from the unit fuel inlet 5, wherein the second heat exchanger 9 is configured to receive fuel 3 from the unit fuel inlet 5 via a fuel line 21. The second heat exchanger 9 is further configured to exchange heat between process air 2 and fuel 3. The second heat exchanger 9 is located in the vicinity of the electric heater 8. The fuel 3 is directable from the second heat exchanger 9 to the unit fuel outlet 12 via fuel line 22.

The gas processing unit 31 comprises a fuel treatment unit (not shown) for processing the stack fuel from the stack fuel inlet 34 and a fuel purifier (not shown) for purifying stack fuel into a recycled fuel comprising fuel for feeding into the unit fuel inlet 5 via a recycled fuel line 26 from a gas processing unit fuel outlet 32. The gas processing unit 31 further comprises a waste fluid outlet 35 for exhausting the afterburner gas 20 as a waste fluid 57 from the gas processing unit 31 via waste fluid line 27. During operation of the electrochemical system 29 in fuel cell mode, the fuel purifier is configured to purify the stack fuel into a recycled fuel comprising hydrogen. The fuel treatment unit comprises a cooler (not shown), condenser (not shown), and a water-gas shift reactor (not shown). The cooler and/or condenser are operable with a cooling fluid 37, wherein the cooling fluid 37 comprises air, cooling water, process water or any other fluid that is able to dissipate heat from stack fuel. The gas processing unit 31 comprises a cooling fluid inlet 36 for receiving fresh cooling fluid 37 and directing said cooling fluid to the cooler and/or condenser. The gas processing unit 31 further comprises a cooling fluid outlet 38 for exhausting a used cooling fluid 39. The condenser is configured to produce a condensate, which is usable to generate steam. This steam then usable to generate a fuel-steam mixture 3 during operation of the electrochemical system 29 in electrolysis mode. Steam is also usable for reforming of fuel 3 comprising carbonaceous fuel during operation of the electrochemical system 29 in fuel cell mode. The operation of the gas processing unit 31, and the fuel treatment unit and the fuel purifier within the gas processing unit 31, is adjustable depending on the operating mode of the electrochemical system. The gas processing unit 31 comprises a separate cooler (not shown) for cooling the afterburner gas 20.

The unit fuel inlet 5 comprises a mixer 40 for mixing fuel 3 from the unit fuel inlet 5 and recycled fuel from the gas processing unit fuel outlet 32 receivable by the unit fuel inlet 5 via recycled fuel line 26. The afterburner 6 also comprises a mixer (not shown) for mixing fuel 3 from the unit fuel inlet 5 and recycled fuel from the gas processing unit fuel outlet 32 which is fed to the afterburner 6 via the recycled fuel line 26.

The afterburner 6 is configured to generate heat by combusting stack exhaust from the stack exhaust line 24 with fuel 3 from the unit fuel inlet 5 and/or recycled fuel from the gas processing unit fuel outlet 32. A desirable mixture of these gases may be chosen for combustion in the afterburner 6 depending on the required heat output of the afterburner 6 and whether afterburner gas 20 from the afterburner gas outlet 53 is to be used for other purposes such as for reforming in a reformer or processing in the gas processing unit 31.

The process air 2 is also flowable through the first heat exchanger 7 without exchanging heat with afterburner gas 20 from the afterburner gas outlet 53 and is heatable solely in the electric heater 8. Wherein the afterburner 6 functions to receive stack exhaust from the stack exhaust inlet 13, the heat contained in the stack exhaust is usable for heating the afterburner gas 20 in the afterburner 6 such that it is then usable for heating the process air 2 in the first heat exchanger 7.

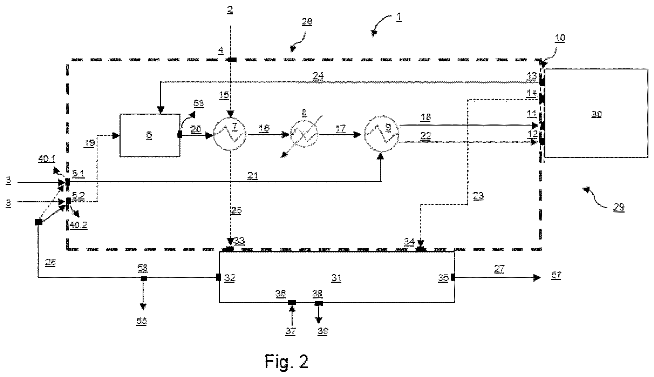

Figure 2 shows an alternative arrangement of the heat management unit 1 according to the first embodiment, wherein the heat management unit comprises a unit fuel inlet 5.1 and 5.2, such that recycled fuel line 26 is separately directable to a unit fuel inlet 5.1 and unit fuel inlet 5.2. The unit fuel inlets 5.1 and 5.2 comprise a mixer 40.1 and 40.2, respectively. The mixers 40.1 and 40.2 are configured to mix fuel 3 with recycled fuel from the gas processing fuel outlet 32 via the recycled fuel line 26. The afterburner 6 is configured to receive a mixture of fuel 3 and recycled fuel from the unit fuel inlet 5.1 via fuel line 19. The second heat exchanger 9 is configured to receive a mixture of fuel 3 and recycled fuel from the unit fuel inlet 5.2 via fuel line 21. Thus, the composition of the mixture of fuel 3 and recycled fuel which is directable to the afterburner 6 from unit fuel inlet 5.1 is selectable independently from the composition of the mixture of fuel and recycled fuel from unit fuel inlet 5.2 which is directable to the second heat exchanger 9.

The recycled fuel line 26 is configured to direct a recycled fuel which substantially comprises the fuel 3 consisting substantially of hydrogen and/or carbonaceous fuel and/or steam, the recycled fuel line 26 further comprises an adjustable valve 58 which allows for a storage fuel 55 to be selectively diverted to a storage (not shown) and/or an external use when required. In this case, the recycled fuel comprising steam from the gas processing unit 31 stems from the condensate from the condenser. In general, the storage fuel 55 substantially comprises hydrogen.

As such, the recycled fuel line 26 has dual functionality in that it is configured to feed a recycled fuel back to the heat management unit 1 and to divert a storage fuel 55 to a storage and/or an external use when required. In particular, the adjustable valve 58 is operable to direct the storage fuel 55 to a storage and/or for usage in an external process in electrolysis mode whereas in fuel cell mode, the storage fuel 55 is retrievable from a storage and directable to the unit fuel inlet 5.1 and/or unit fuel inlet 5.2. In the unit fuel inlets 5.1 and 5.2, fuel 3 is mixable by the mixer 40.1 and 40.2, respectively, with the storage fuel 55.

All other features and processes in Figure 2 remain the same as shown in Figure 1.

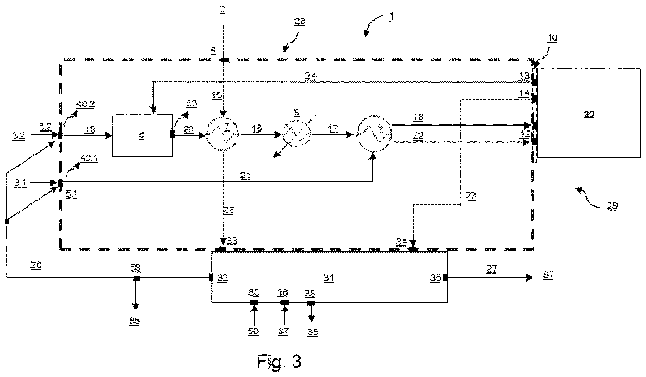

Figure 3 shows an alternative arrangement of the heat management unit 1 and electrochemical system 29 according to the first embodiment shown in Figure 1 and also incorporates the features of the alternative arrangement shown in Figure 2, except that in Figure 3 the heat management unit 1 comprises unit fuel inlets 5.1 and 5.2 for a fuel 3.1 and a fuel 3.2, respectively. As such, all other features and processes remain the same as those described for Figure 1, except for the features included from Figure 2.

The second heat exchanger 9 is configured to receive fuel 3.1 from unit fuel inlet 5.1 via fuel line 21, wherein the unit fuel inlet 5.1 comprises a mixer 40.1 for mixing fuel 3.1 with recycled fuel from the gas processing unit fuel outlet 32. The second heat exchanger 9 is configured to exchange heat between process air 2 and the mixture of fuel 3.1 and recycled fuel.

The afterburner 6 is configured to receive stack exhaust from the stack exhaust inlet 13 via stack exhaust line 24 and fuel 3.2 from unit fuel inlet 5.2 via fuel line 19. Fuel 3.2 is mixable by mixer 40.2 in unit fuel inlet 5.2 with recycled fuel receivable from a gas processing unit outlet 32 via a recycled fuel line 26.

The afterburner 6 is configured to generate heat by combusting stack exhaust from the stack exhaust line 24 with fuel 3.2 and/or recycled fuel from the gas processing unit fuel outlet 32. A desirable mixture of fuel 3.2 and recycled fuel is selectable for combustion in the afterburner 6.

Within the gas processing unit 31, the condenser (not shown) is configured to produce a condensate which is usable for the generation of fuel 3.1 comprising steam during operation of the electrochemical system 29 in electrolysis mode, wherein fuel 3.1 comprising steam is generatable in conjunction with water 56 from a gas processing unit water inlet 60. Steam is also usable for reforming of fuel 3.1 comprising carbonaceous fuel during operation of the electrochemical system 29 in fuel cell mode.

During operation of the electrochemical system 29 in electrolysis mode, a storage fuel 55 is divertible from the recycled fuel line 26 to a storage (not shown). Storage fuel 55 is then usable as fuel 3.1 during operation of the electrochemical system 29 in fuel cell mode.

Further, in this arrangement, wherein the recycled fuel line 26 has dual functionality, the storage fuel 55 is retrievable from a storage and directable via the recycled fuel line 26 to unit fuel inlet 5.1 and/or 5.2 during operation of the electrochemical system 29 in fuel cell mode. In this arrangement, the storage fuel 55 is thus mixable with fuel 3.1 in the unit fuel inlet 5.1 by mixer 40.1. As such, the recycled fuel line 26 is configured to simultaneously direct recycled fuel to unit fuel inlet 5.1 and/or 5.2.

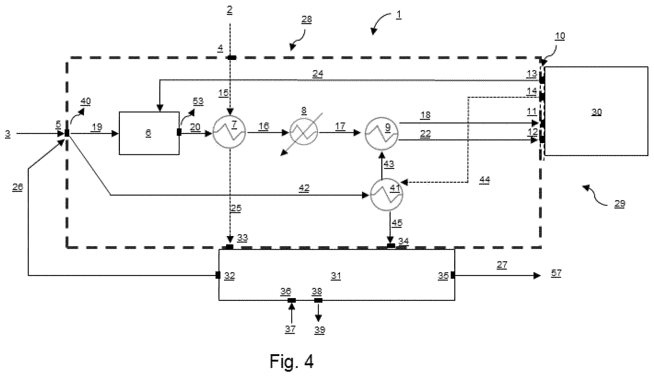

Figure 4 shows the arrangement of the heat management unit 1 and electrochemical system 29 according to a second embodiment, wherein the heat management unit 1 additionally comprises a third heat exchanger 41. As such, all features and processes remain the same as described in Figure 1, except for wherein, prior to heat being exchangeable between fuel 3 and process air 2 in the second heat exchanger 9, fuel 3 is first heatable in the third heat exchanger 41. The third heat exchanger 41 is configured to receive fuel 3 from the unit fuel inlet 5 via fuel path 42 and stack fuel from the stack fuel inlet 14 via stack fuel path 44. The third heat exchanger 41 is configured to exchange heat between fuel 3 and said stack fuel. The fuel 3 is flowable from the third heat exchanger 41 to the second heat exchanger 9 via fuel path 43. The stack fuel is then directable from the third heat exchanger 41 to the stack fuel inlet 34 of the gas processing unit 31 via stack fuel path 45.

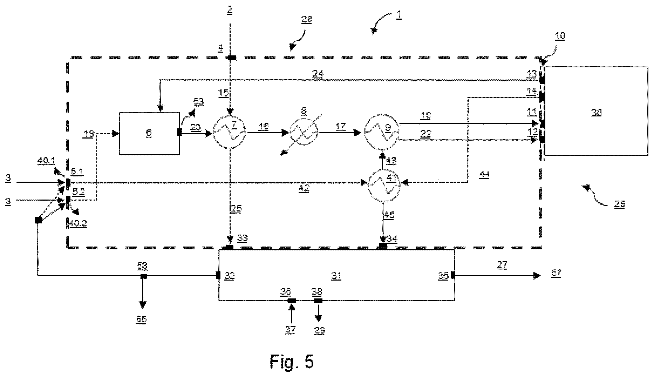

Figure 5 shows an alternative arrangement of the heat management unit 1 and electrochemical system 29 according to the second embodiment which includes a third heat exchanger 41 as shown in Figure 4, except that in Figure 5 the recycled fuel line 26 is separately directable to a unit fuel inlet 5.1 and unit fuel inlet 5.2. The unit fuel inlets 5.1 and 5.2 comprise a mixer 40.1 and a mixer 40.2, respectively. The mixers 40.1 and 40.2 are configured to mix fuel 3 with recycled fuel from the gas processing fuel outlet 32 via the recycled fuel line 26. The afterburner 6 is configured to receive a mixture of fuel 3 and recycled fuel from the unit fuel inlet 5.1 via fuel line 19. The third heat exchanger 41 is configured to receive a mixture of fuel 3 and recycled fuel from the unit fuel inlet 5.2 via fuel line 42. Thus, the composition of the mixture of fuel 3 and recycled fuel which is directable to the afterburner 6 from unit fuel inlet 5.1 can be chosen independently from the composition of the mixture of fuel and recycled fuel from unit fuel inlet 5.2 which is directable to the third heat exchanger 41. All other features and processes shown in figure 5 remain the same as shown in Figure 1.

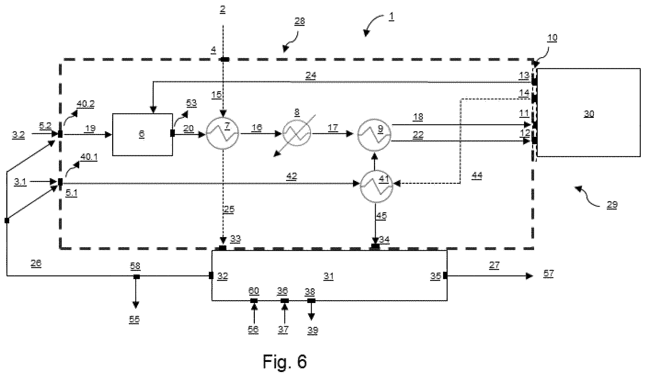

Figure 6 shows an alternative arrangement of the heat management unit 1 and electrochemical system 29 according to the second embodiment shown in Figure 4, wherein Figure 6 also incorporates the features of the alternative arrangement shown in Figure 5. However, in Figure 6, the third heat exchanger 41 is configured to receive a mixture of fuel 3.1 and recycled fuel from the unit fuel inlet 5.1 via a fuel path 42 and stack fuel from the stack fuel inlet 14 via stack fuel path 44. As such, all other features and processes remain the same as those described for Figure 1, except for the features included from Figures 4 and 5. The third heat exchanger 41 is configured to exchange heat between the fuel mixture comprising fuel 3.1 and stack fuel. The fuel 3.1 in mixture with recycled fuel is flowable from the third heat exchanger 41 to the second heat exchanger 9 via fuel path 43. The stack fuel is directable from the third heat exchanger 41 to the stack fuel inlet 34 of the gas processing unit 31 via stack fuel path 45.

Figure 7 shows a third embodiment of the arrangement of the heat management unit 1 and electrochemical system 29. In this embodiment, all features and processes remain the same as described in Figures 1 and 4, except for wherein the heat management unit 1 additionally comprises a reformer 46. The reformer 46 is configured to reform fuel 3, wherein the reformer 46 receives fuel 3 from the unit fuel inlet 5 via a fuel path 47. The reformer 46 comprises a reformer fuel outlet 54 for feeding said fuel to the third heat exchanger 41 via fuel path 49, wherein the third heat exchanger 41 operates according to the second embodiment. The reformer 46 is connected to the afterburner 6 such that the reformer 46 receives afterburner gas 20 from the afterburner gas outlet 53 via afterburner gas line 48, wherein a flow regulator 50 splits the flow of afterburner gas 20 to the first heat exchanger 7 and to the reformer 46, wherein the temperature of the reformer 46 is controllable by the flow regulator 50 by regulating the flow rate of afterburner gas 20 to the reformer 46 using the flow regulator 50. The reformer 46 also comprises a heat exchanger configured to exchange heat between afterburner gas 20 and fuel 3. The reformer 46 is connected to the gas processing unit 31 via afterburner gas line 51, wherein the gas processing unit 31 comprises a second afterburner gas inlet 52 for receiving afterburner gas 20 from the reformer.

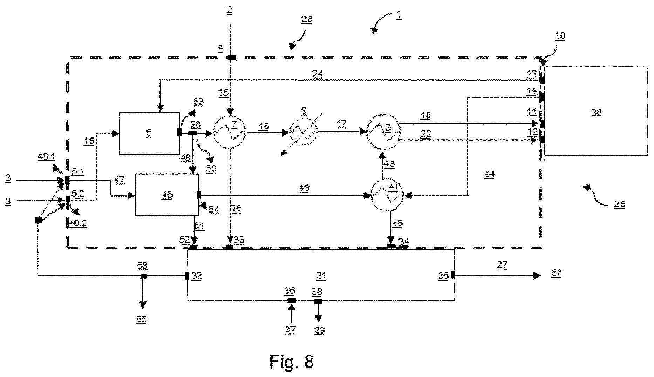

Figure 8 shows an alternative arrangement of the heat management unit 1 and electrochemical system 29 according to the third embodiment shown in Figure 7, except for wherein the recycled fuel line 26 is separately directable to a unit fuel inlet 5.1 and unit fuel inlet 5.2. Thus, as with Figure 7, all other features and processes remain the same as in Figure 1. The unit fuel inlets 5.1 and 5.2 comprise a mixer 40.1 and a mixer 40.2, respectively. The mixers 40.1 and 40.2 are configured to mix fuel 3 with recycled fuel from the gas processing fuel outlet 32 via the recycled fuel line 26. The afterburner 6 is configured to receive a mixture of fuel 3 and recycled fuel from the unit fuel inlet 5.1 via fuel line 19. The reformer 46 is configured to receive a mixture of fuel 3 and recycled fuel from the unit fuel inlet 5.2 via fuel line 47. Thus, the composition of the mixture of fuel 3 and recycled fuel which is directable to the afterburner 6 from unit fuel inlet 5.1 can be chosen independently from the composition of the mixture of fuel and recycled fuel from unit fuel inlet 5.2 which is directable to the reformer 46.

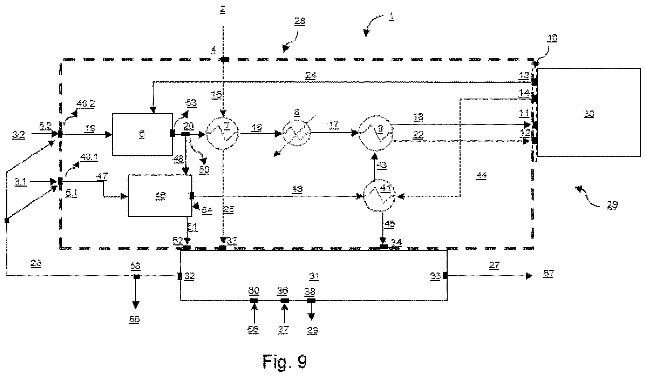

Figure 9 shows an additional arrangement of the heat management unit 1 and the electrochemical system 29 according to the third embodiment shown in Figure 7, wherein Figure 9 also incorporates the features of the alternative arrangement shown in Figure 8 with the exception that in Figure 9, the reformer 46 is configured to reform a mixture of fuel 3.1 and recycled fuel receivable by the reformer via a fuel path 47 from unit fuel inlet 5.1 into a reformed fuel. The reformer 46 also comprises a heat exchanger configured to exchange heat between afterburner gas 20 and the mixture of fuel 3.1 and recycled fuel. In this arrangement, the steam from the condenser is directable to the reformer 46 for the reforming of fuel 3.1 comprising carbonaceous fuel in addition to being usable to be mixed with fuel 3.1 during operation of the electrochemical system 29 in electrolysis mode. As such, Figure 9 incorporates the features of Figures 3 and 6 as well, while all other features and processes remain the same as described for Figure 1.

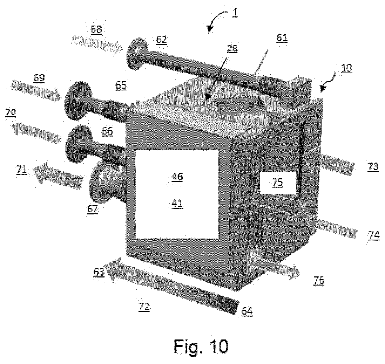

Figure 10 shows a 3D-representation of a heat management unit 1 according to the third embodiment, wherein flow streams and piping for process air, fuel, stack fuel, and stack exhaust gas to and from the heat management unit 1 are depicted. The reformer 46 and third heat exchanger 41 are arranged at the front side of the heat management unit. A connector 61 for an electric heater (not shown) is located on the top of the heat management unit 1.

A pipe 62 is leading a flow stream 68 comprising combustible gas to an afterburner (not shown). A flow stream 69 comprising fuel is directable to the heat management unit via a pipe 65. A flow stream 70 comprising stack fuel is directable out of the heat management unit 1 via a pipe 66. A flow stream 71 comprising stack exhaust and/or afterburner gas is directable out of the heat management unit 1 via a pipe 67. A pipe leading a flow stream comprising process air into the heat management unit 1 is located next to pipe 67 and cannot be seen in this figure.

The heat management unit 1 has a temperature gradient 72, such that pipes 65, 66 and 67 are connected to the heat management unit 1 at a cold side 63 of the heat management unit 1. The pipe 62 is connected to the heat management unit 1 at a hot side 64 of the heat management unit 1.

A stack connection device 10 is arranged next to the hot side 64 of the heat management unit 1. A flow stream 73 comprising stack exhaust from a stack module (not shown) and a flow stream 74 comprising stack fuel is directable to the heat management unit 1 via the stack connection device 10. A flow stream 75 comprising process air and a flow stream 76 comprising fuel are directable from the heat management unit 1 to a stack module (not shown) via the stack connection device 10.

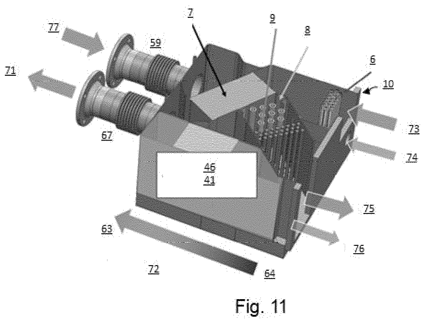

Figure 11 shows a generalized 3D-representation of the innards of the heat management unit 1 according to the third embodiment as shown in Figure 10. A flow stream 77 comprising process air is directable into the heat management unit 1 via a pipe 59 can also be seen in this figure.

Afterburner 6 is comprised of a plurality of vertically aligned tubes with apertures configured to mix stack exhaust receivable in the flow stream 73 from the stack module (not shown). The electric heater 8 is comprised of a plurality of vertically aligned electric heating rods, along which process air within flow stream 77 from pipe 59 is flowable. A second heat exchanger 9 comprises a plurality of vertically aligned hollow tubes through which a fuel within flow stream 69 from pipe 65 is flowable such that heat is exchangeable between said fuel and process air from the electric heater 8, such that the temperature between the two flow streams 69 and 66 comprising fuel and process air, respectively, can be levelled.

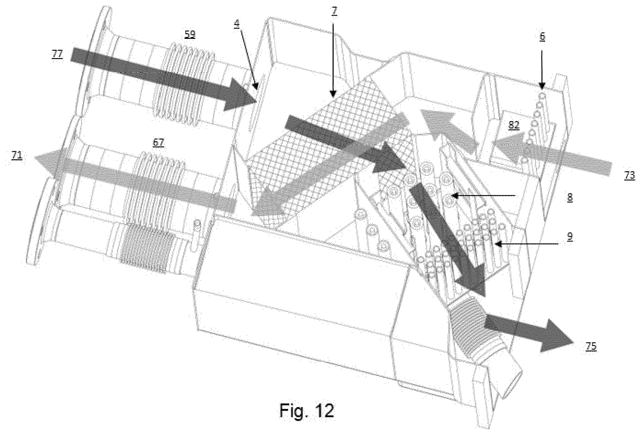

Figure 12 depicts the flow paths of process air, which is flowable into the heat management unit 1 via the flow path 77 within pipe 59, and stack exhaust, which is flowable into the heat management unit 1 via the flow path 73 from the stack module (not shown), through the heat management unit 1 according to Figures 7 and 8. The flow stream 77 comprising process air is receivable by the heat management unit 1 in pipe 77 via a unit process air inlet 4. The process air is flowable through the first heat exchanger 7, the electric heater 8 and the second heat exchanger 9. The stack exhaust in flow stream 73 from the stack module is flowable through the afterburner 6. The flow path of flow stream 73 through the afterburner 6 is extendable through the afterburner 6 inside a plate 82 within the afterburner 6, wherein the plate 82 creates a labyrinth structure. From the afterburner 6, the stack exhaust is flowable as afterburner gas to the first heat exchanger 7, from which the afterburner gas is flowable out of the heat management unit 1 in the flow stream 71 via pipe 67. In the first heat exchanger 7, heat is exchangeable between process air from unit process air inlet 4 and stack exhaust in the form of afterburner gas from the afterburner 6. In the second heat exchanger 8, heat is exchangeable between fuel (not shown) and process air from the electric heater. From the second heat exchanger 8, process air is flowable to the stack module via the unit process air outlet (not shown) and the stack connection device (not shown).

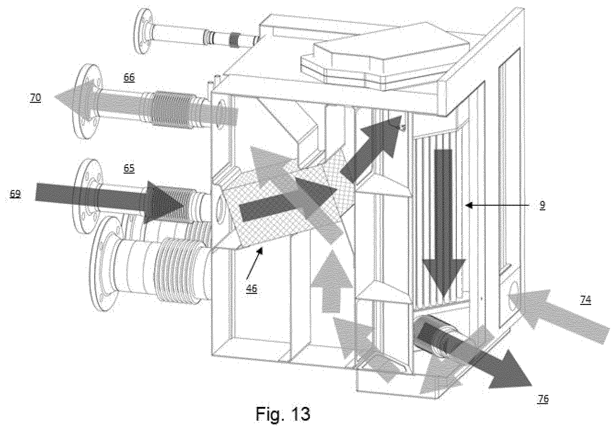

Figure 13 depicts the flow paths of fuel and stack fuel through the heat management unit 1 according to the third embodiment shown in Figure 7. Fuel is flowable into the heat management unit 1 via the flow path 69 within pipe 65. Within the heat management unit 1, fuel from pipe 65 is first flowable through the reformer 46 and then through the third heat exchanger (not shown), from which the fuel is directable through the second heat exchanger 9. From the second heat exchanger 9, fuel is flowable to the stack module (not shown) via the unit fuel outlet (not shown).

Stack fuel is flowable into the heat management unit 1 via the flow path 74 from the stack module (not shown) through the stack fuel inlet (not shown). From the stack fuel inlet, the stack fuel is flowable past the third heat exchanger (not shown), where heat is exchangeable between fuel and stack fuel from the stack fuel inlet, and then out of the heat management unit 1 via pipe 66 in flow stream 70.

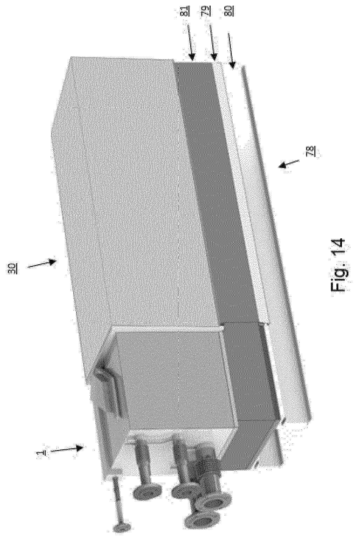

Figure 14 shows an arrangement of the management unit 1 according to any of the three embodiments within the thermally insulated enclosure (not shown), relative to a stack module 30. The stack module 30 and heat management unit 1 are disposed on a support structure 78, wherein the support structure 78 comprises supporting elements 79 and a chassis 80. The heat management unit 1 and the stack module 30 are separated from the support structure 78 by a thermal insulation layer 81 such as to create a hot zone which separates the heat management unit 1 and the stack module 30 from any equipment disposed beneath the chassis 80.

## Claims

1. A heat management unit (1) for a reversible electrochemical system comprising
a process air (2) flow path and a fuel (3) flow path wherein the process air (2) flow path comprises a unit process air inlet (4), a first heat exchanger (7), an electric heater (8) and a second heat exchanger (9), and a unit process air outlet (11) and the fuel flow path comprises a unit fuel inlet (5), a unit fuel outlet (12), and a fuel path through the second heat exchanger (9),
wherein in the second heat exchanger (9) heat is exchangeable between process air (2) and fuel (3),
wherein the heat management unit (1) further comprises a stack connection device (10),
wherein the stack connection device (10) enables a connection to a stack module (30),
the stack connection device (10) comprising the unit fuel outlet (12), the unit process air outlet (11) and additionally a stack exhaust inlet (13) and a stack fuel inlet (14) **characterized in that** the stack exhaust inlet (13) is connected to an afterburner (6),
wherein in the afterburner (6), stack exhaust from the stack exhaust inlet (13) is usable for the combustion of fuel (3) in the afterburner (6), wherein the afterburner (6) is connected to the first heat exchanger (7) such that heat is exchangeable between an afterburner gas (20) from an afterburner gas outlet (53) and process air (2) from the unit process air inlet (4) in the first heat exchanger (7).

2. The heat management unit (1) according to claim 1, wherein the second heat exchanger (9) is located adjacent to the electric heater (8) and wherein the second heat exchanger (9) comprises at least one hollow tube through which fuel (3) from the unit fuel inlet (5) is flowable.

3. The heat management unit (1) according to claim 1 or 2,
wherein the fuel flow path comprises a third heat exchanger (41), wherein the third heat exchanger (41) is connected to the unit fuel inlet (5) and stack fuel inlet (14) such that heat is exchangeable between fuel (3) from the unit fuel inlet (5) and stack fuel from the stack fuel inlet (14) in the third heat exchanger (41).

4. The heat management unit (1) according to any one of the previous claims, wherein the fuel flow path comprises a fuel path through a reformer (46) equipped to reform fuel (3), the fuel (3) comprising of carbonaceous gas and/or hydrogen and/or ammonia, wherein the reformer (46) is connected to the afterburner gas outlet (53) and the unit fuel inlet (5), wherein the reformer (46) comprises a reformer fuel outlet (54) for fuel (3), the reformer fuel outlet (54) being connected to the second heat exchanger (9), optionally via the third heat exchanger (41) such that heat is first exchangeable in the third heat exchanger (41) between fuel (3) from the reformer fuel outlet (54) and stack fuel from the stack fuel inlet (14), such that heat is exchangeable between fuel (3) and process air (2)in the second heat exchanger (9).

5. The heat management unit (1) according to claim 4, wherein the heat management unit (1) comprises a flow regulator (50) to regulate the flow rate of afterburner gas (20) to the reformer (46) such as the regulate the temperature of the reformer (50).

6. The heat management unit (1) according to one of claims 4 to 5, wherein the reformer (46) comprises a heat exchanger configured to exchange heat between afterburner gas (20) outlet (53) and fuel (3) from the unit fuel inlet (5).

7. The heat management unit (1) according to any one of claims 4 to 6, wherein the fuel flow path comprises a third heat exchanger (41) wherein the third heat exchanger (41) is connected to the reformer fuel outlet (54) of the reformer (46) and the stack fuel inlet (14) such that heat is exchangeable between fuel (3) from the reformer fuel outlet (54) and stack fuel in the third heat exchanger (41).

8. The heat management unit (1) according to one of claims 1 to 7, wherein the heat management unit (1) is integrated in a thermally insulated enclosure (28).

9. The heat management unit (1) according to one of claims 1 to 8, wherein the afterburner gas outlet (53) is connected to a gas processing unit (31), the gas processing unit (31) comprising means for cooling afterburner gas (20), an outlet for exhausting afterburner gas (20) from the heat management unit (1), means for purifying fuel gas from the heat management unit (1) in case the stack module (30) is operated as an electrolyzer, means for preparing the fuel gas supplied to the fuel inlet of the heat management unit (1), means for purifying fuel gas from the heat management unit (1) in case the stack is operated as a fuel cell, means to mix external fuel and purified fuel cell fuel, and means for feeding external fuel or a mix of external fuel and purified fuel cell fuel to the afterburner (6).

10. An electrochemical system (29) comprising the heat management unit (1) according to one of claims 1 to 8, and a stack module (30), the stack module (30) being connected to the heat management unit (1) by the stack connection device (10) .

11. The electrochemical system (29) according to claim 9,
wherein the stack module (30) comprises at least one reversible solid oxide cell.

12. The electrochemical system according to one of claims 10 and 11, wherein the electrochemical system 29 comprises a control unit with a control logic, and controllers/sensors for controlling the electrochemical system.

13. A method for heat management for an electrochemical system (29) according to claims 9 to 12, wherein process air (2) is conducted through the process air flow path and fuel (3) is conducted through the fuel flow path wherein the process air (2) is heated up in the first heat exchanger (7) and/or in the electric heater (8) and then exchanges heat in the second heat exchanger (9) and fed to the stack module (30) via the unit process air outlet (11) and fuel (3) is conducted through the second heat exchanger (9), wherein the fuel (3) exchanges heat with the process air (2), and enters the stack module (30) via the unit fuel outlet (12), **characterized in that** stack exhaust from the stack exhaust inlet (13) is conducted to the afterburner (6) and afterburner gas (20) is conducted from the afterburner (6) to the first heat exchanger (7).

14. The method for heat management according to claim (13),
wherein the fuel (3) from the unit fuel inlet (5) is first heated in the third heat exchanger (41) and then conducted through the second heat exchanger (9).

15. The method for heat management according to one of claims 13 or 14, wherein the fuel (3) is first conducted through the reformer (46) and then conducted through the second heat exchanger (9).

16. The method for heat management according to one of claims 13 to 15, wherein the afterburner (6) ignites the electrochemical system (29) during start-up operation by combusting fuel (3) from the unit fuel inlet (5) with stack exhaust from the stack exhaust inlet (13).

17. The method for heat management according to one of claims 13 to 16, wherein the stack exhaust is directed from the afterburner (6) to the gas processing unit (31) outside the thermally insulated enclosure (29) for cooling and exhausting the stack exhaust gas from heat management unit (1) or purifying the stack exhaust into a fuel which is fed to the unit fuel inlet (5).
